# EUROPEAN PATENT APPLICATION

(11) **EP 1 320 218 A1**
(43) Date of publication of application: **18.06.2003**
(21) Application number: 02017110.4
(22) Date of filing: 30.07.2002
(51) Int. Cl.: H04L 12/24

(54) **A method of creating a number of objects being stored in a database of a network management system**

(71) Applicant: Agilent Technologies Inc, Palo Alto, CA 94306-2024 (US)
(72) Inventor: Hipp, Christoph, 72401 Haigerloch (DE); Nyguen, Trang, 71063 Sindelfingen (DE); Sarraf, Alain, 71083 Herrenberg (DE)
(74) Representative: Barth, Daniel

(57) **Abstract**

A method of operating a communication network with a network management system is described. Said communication network comprises a number of objects being stored in a database on a server. Said network management system is located on the server which can be accessed by a client. Said method of operating the communication network comprises the transmission of data between the server and the client under the use of the Common Object Request Broker Architecture (CORBA). Said method comprises the step of using a single definition for creating a number of objects.

## Description

### Background of the invention

The invention relates to a network management system for a communication network and in particular to an interface for a network management system.

Network management systems are known on the market and are used e.g. for planning and documenting a communication network. These systems generally store information about all objects operating in the communication network. These objects are generally stored in a database on a server. The information stored in the network management system can be accessed via a client program which is located on a remote computer i.e. on a client.

In order to communicate between the server and the client, the Common Object Request Broker Architecture (CORBA) can be used. Thus, the programming languages and operating systems of the server programs are independent of the client programs.

CORBA enables the definition of interfaces which can be viewed as representations for the objects which are stored on the server. Each of the interfaces is comprised of attributes and operations which reflect the nature of the objects they represent. The interfaces may be used e.g. to activate a specific device of the communication network wherein the device is defined by the attributes of the interface.

If a new device is introduced in the communication network, a new corresponding object has to be defined. For that purpose, respective instructions are provided by the network management system's CORBA interfaces which enable a user to create the new object.

In case of a huge number of new objects representing devices or other network entities such as fibers, cables, buildings, etc., the objects have to be created one by one using an interface which provides the capability for single object creation.

### Object and advantages of the invention

It is an object of the invention to provide an improved interface to a network management system which allows a better processing of a huge number of new network objects.

This object is solved by the method of claim 1. As well, the object is solved by the communication network of claim 7, the network management system of claim 8 and the interface of claim 9.

The invention provides the possibility of using a single definition of an operation for creating a number of objects. Or in other words: the invention introduces a new instruction for the network management system's CORBA interfaces which allows the creation not only of one new object, but of a number of new objects simultaneously. As a result, if a number of new objects are introduced in the communication network, the client program does not have to create one object after the other, but can use the new instruction introduced by the invention in order to create all required new objects with this single instruction. Apparently, the needed effort is less. In particular, the programming effort for the client is reduced, the network traffic required to create the objects is reduced, and the time required to create the objects is reduced.

In an advantageous embodiment of the invention, a list of descriptors has to be provided before using the definition for creating a number of objects. This list is then used for the creation of the number of objects. In particular, the number of objects depends on the descriptors.

Further embodiments of the invention are provided in the dependent claims. In particular, it is emphasized that the invention may also be realized by a computer program or a computer program product which are able to execute the method of claim 1 when run on a data processing system.

### Detailed description of embodiments of the invention

In a communication network of e.g. a company, a large number of objects needs to be managed. These objects may be, for example, buildings, floors and rooms for which the network to be managed is intended. Further objects may be cables, telephones, facsimiles and other devices used to build up the network. Representations of all these objects are stored in a database and are managed by a network management system.

The network management system is provided for planning and implementing the communication network. As well, any change to the network, e.g. if a participant of the network moves from one room to another or if a card is moved from one network element to another or if an object is removed from a network device, is supported by the network management system. This means that the network management system keeps a consistent view of the communication network at all times and that the data in the database is updated when a change occurs.

Another property of the network management system is the ability to respond to queries, e.g. to provide a list of all cordless telephones in a specific building. These queries are generally sent to the network management system via a client program. For these purposes, the client of the network management system has to access the objects in the database.

The database, the network management system, and the network management system's client are parts of a distributed system in which the database is part of a server and the client executes independently. The server programs and the client programs are executed in independent address spaces and are possibly located on separate computer systems.

In order to communicate between the server and the client, the Common Object Request Broker Architecture (CORBA) is used which comprises an Interface Description Language (IDL). Using CORBA IDL, the server and the client can communicate independent of e.g. the programming languages which are used within the server programs or the client programs.

In CORBA IDL, an object of the communication network as mentioned above can be described as follows:

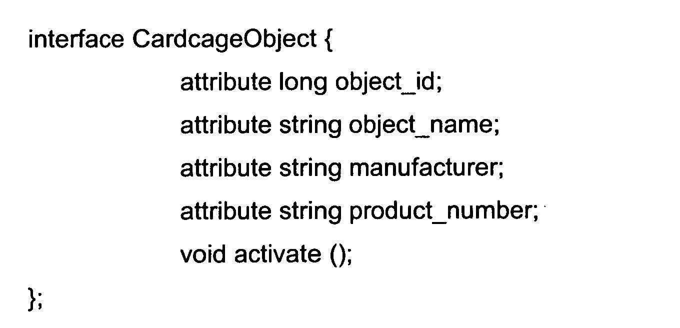

This definition has the name "CardcageObject" and represents a so-called interface. It has the purpose to activate a specific cardcage of the communication network which is defined e.g. by the "manufacturer" and the "product_number". The interface comprises a number of attributes, e.g. "manufacturer", and an operation, e.g. "activate", in one and the same definition.

In order to create an object which implements the interface as described above, a client could use the following definition:

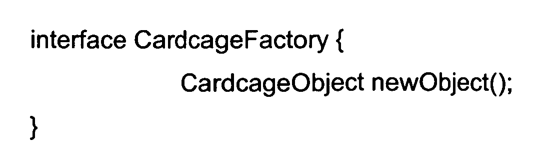

This definition has the name "CardcageFactory" and is able to create new objects one by one on demand that may then be used to carry out desired tasks, e.g. the activation of a cardcage. The objects which the CardcageFactory creates when a client invokes the "newObject" operation conform to the CardcageObject-interface previously described.

Entities of all interfaces as mentioned above, i.e. objects which implement the interfaces, are stored on the server. A client program is able to access these interfaces by sending a respective instruction to the server. For example, if the client sends the instruction "newObject" to the CardcageFactory residing on the server, the server will create the corresponding object that conforms to the CardcageObject-interface. This may in turn result in the creation of data for this object in the database of the network management system. If the client then sends the instruction "activate" to the CardcageObject which now resides on the server, the CardcageObject will activate the specific cardcage which is represented by the created object. The device activation is performed by the created object in accordance to the specified CORBA IDL interface.

A further CORBA IDL definition may be described as follows:

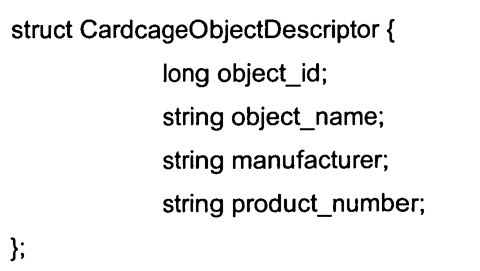

In this definition, the attributes are separated from the operations. This means that in one and the same definition only attributes are comprised. In particular, the CardcageObjectDescriptor cannot contain operations by definition and only holds the attribute values.

The separation of the attributes and the operations is realized by a so-called struct construct. The struct for the "CardcageObjectDescriptor" is a descriptor for a corresponding interface with the name "CardcageObject". The struct only comprises the attributes of the CardcageObject, but not its operation.

The operation of the CardcageObject i.e. the activate operation is contained in the definition of the "CardcageObject". The attributes are referenced by the client via the CardcageObjectDescriptor which is defined in the described struct descriptor. The attributes are therefore accessible via the CardcagaeObjectDescriptor without the need for a CardcageObject.

The following new CORBA IDL definitions are added to the network management system's set of definitions:

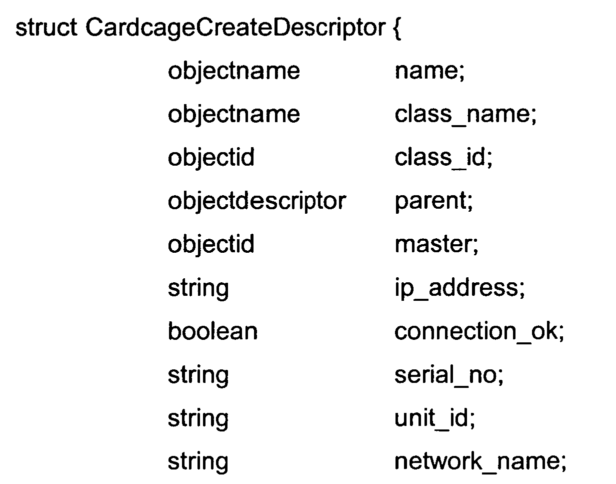

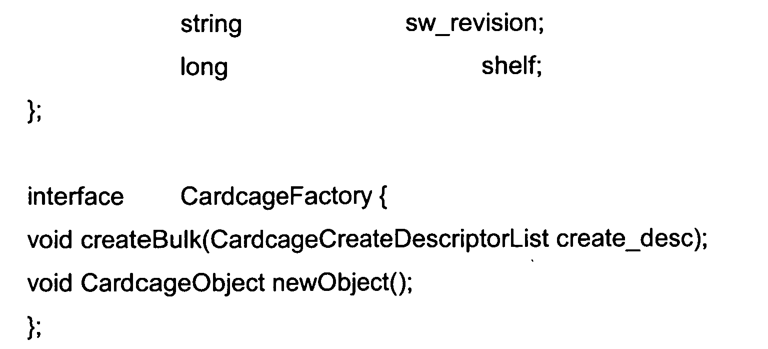

The names, e.g. ip_address or serial_no, are the attributes which are necessary to describe an object for its creation. These attributes would usually be specified one by one using separate operations if a programmer would use a method according to the prior art and would create each object one by one.

The new struct "CardcageCreateDescriptor" describes all attributes that are necessary for creating a cardcage in one place. Of course, the new struct is not specific to cardcages but the concept may be generically applied to any other object type, e.g. room, rack, fiber, cable, and so on.

The afore-mentioned, new CardcageFactory definition extends the previous definition.

With these new definitions, the creation of cardcages in a bulk mode is supported.

It is important to differentiate as follows:

With the original described definition named "CardcageFactory", it is possible to create only one new object wherein the created object is in conformity with the described CardcageObject-interface.

With the described definition "CardcageObjectDescriptor", again, it is possible to create only one new object which, however, only comprises attributes and no operations.

With the new definition named "CardcageCreateDesriptor", it is possible to create a number of objects wherein the creation of these objects depends on descriptors which have to be passed to the CardcageFactory doing the CreateBulk operation before.

The difference between the CardcageCreateDescriptor-definition and the CardcageObjectDescriptor-definition is that the objects created by the CardcageCreateDescriptor-definition do not contain any attributes which are automatically set by the network management system, whereas the object created by the CardcageObjectDescriptor-definition does. In connection with the present example of cardcages, these attributes are the cardcage identification, the cardcage status and the cardcage type.

As already mentioned, the descriptors have to be passed to the CardcageFactory, in particular as a list of the CardcageCreateDescriptor-struct. For that purpose, the descriptors have to be established before by the client program, in particular by the network management system.

If a client, e.g another network management system, then sends the instruction "createBulk" to the server, the server creates a number of objects wherein the creation of these objects depends on those descriptors which were passed to the CardcageFactory.

The attributes which are not set by the createBulk-instruction, can be assigned to the respective objects by the network management system at a later point in time.

The createBulk-instruction may be used for the creation of a huge number of new objects. In this case, the createBulk-instruction avoids to create each one of the objects separately, but allows to create and transfer all required objects with a single definition and in one operation.

## Claims

1. A method of operating a communication network with a network management system, wherein said communication network comprises a number of objects being stored in a database on a server, and wherein said network management system is located on the server which can be accessed by a client, said method of operating the communication network comprises the transmission of data between the server and the client under the use of the Common Object Request Broker Architecture (CORBA), said method comprising the step of using a single definition for creating a number of objects.

2. The method of claim 1 wherein a list of descriptors has to be provided before using the definition for creating a number of objects.

3. The method of claim 2 wherein the number of objects depends on the descriptors.

4. The method of claim 1 wherein the created objects do not comprise all attributes.

5. The method of claim 4 wherein the created objects do not comprise an identification and/or a status and/or a type.

6. A computer program or a computer program product preferably stored on a data carrier, for executing the method of claim 1 when run on a data processing system such as a computer.

7. A communication network with a network management system, wherein said communication network comprises a number of objects being stored in a database on a server, wherein said network management system is located on the server which can be accessed by a client, and wherein said communication network comprises the transmission of data between the server and the client under the use of the Common Object Request Broker Architecture (CORBA), wherein a single definition for creating a number of objects is used.

8. A network management system for a communication network, wherein said communication network comprises a number of objects being stored in a database on a server, wherein said network management system is located on the server which can be accessed by a client, and wherein said communication network comprises the transmission of data between the server and the client under the use of the Common Object Request Broker Architecture (CORBA), wherein a single definition for creating a number of objects is used.

9. An interface to a network management system of a communication network, wherein said communication network comprises a number of objects being stored in a database on a server, wherein said network management system is located on the server which can be accessed by a client, and wherein said communication network comprises the transmission of data between the server and the client under the use of the Common Object Request Broker Architecture (CORBA), wherein a single definition for creating a number of objects is used.
